# EUROPEAN PATENT APPLICATION

(11) **EP 2 524 884 A1**
(43) Date of publication of application: **21.11.2012**
(21) Application number: 12168766.9
(22) Date of filing: 21.05.2012
(51) Int. Cl.: B65G 49/06

(54) **Wheel conveyor and method to move forward a glass sheet**

(30) Priority: 19.05.2011 IT TO20110447
(71) Applicant: Bottero S.p.A., Cuneo (IT)
(72) Inventor: Balbi, Mario, 12100 CUNEO (IT); Bisol, Giorgio, 10094 GIAVENO (IT)
(74) Representative: Jorio, Paolo

(57) **Abstract**

A conveyor (1) and method, according to which a glass sheet (2) is selectively moved forward in a longitudinal direction (46) and in a direction (47) transversal to the longitudinal direction (46), by using at least one assembly (9) of wheel conveying units (10) distributed on a horizontal plane (P) and each having a fixed support frame (15), one or more drawing wheels (25) arranged in vertically fixed position with respect to the horizontal plane (P), a first transmission (27) to rotate the drawing wheels (25) about a horizontal axis (22a) parallel to the plane (P), and a second transmission (37) to rotate the drawing wheels (25) about a vertical hinge axis (18) orthogonal to the horizontal plane (P).

## Description

The present invention relates to a wheel conveyor to move forward a glass sheet.

In particular, the present invention relates to a table- or bench-type conveyor, adapted to move forward the glass sheets arranged horizontally.

The use of belt conveyors is known for moving forward glass sheets arranged horizontally or flat, in which a plurality of ring-closed belts arranged side-by-side and parallel to one another support the sheet and move it forward in a longitudinal forward direction. The sheets must be arranged in a reference position either before or during the forward movement, and for this reason the known conveyors comprises reference locators, normally consisting of idle wheels with fixed vertical axis aligned with one another in a direction parallel to the longitudinal forward direction and conveniently arranged along a longitudinal side edge of the conveyor. The sheets are moved towards such locators by translating them in a direction orthogonal to the forward direction by means of a motorized, forward movement wheel unit associated with the ring-like belts. The wheel which are grouped in rows and keyed onto shafts in common to each row, rotate about axes again parallel to the longitudinal direction. The wheels are then vertically movable between a lowered resting position, in which they extend under a conveying plane defined by the outward branches of the belts, thus allowing the belts themselves to move the sheet forward in the longitudinal direction, and a raised conveying position, in which they lift the sheet from the outward branches of the belts and move it towards the locators.

The known conveyors of the above-described type, although universally used, are particularly complex from the construction point of view and difficult to maintain in addition to being costly, mainly because they comprise two reciprocally independent motorized devices to selectively cooperate with the sheet.

Furthermore, the known conveyors do not allow to correct the sheet movement direction, especially in the longitudinal direction if, for example as a result of wear, the actual forward direction differs from the longitudinal direction required in design, resulting in the sheet being in a delivery position different from that required in design at the conveyor outlet.

It is the object of the present invention to provide a wheel conveyor, which simply and cost-effectively solves the aforementioned problems.

According to the present invention, a wheel conveyor to move forward a glass sheet is provided, comprising a support structure and conveying means to selectively move forward at least one glass sheet in a longitudinal direction and in a direction transversal to said longitudinal direction, **characterized in that** said conveying means comprise at least one assembly of wheel conveying units distributed in a horizontal plane and each comprising a support frame coupled to said structure, at least one respective motorized drawing wheel arranged in a vertically fixed position with respect to said horizontal plane and to said fixed frame, first driving means to rotate said drawing wheel about a horizontal axis parallel to said plane, and second driving means to rotate said drawing wheel about a vertical hinge axis orthogonal to said horizontal plane.

In the conveyor defined above, at least part of said conveying units preferably comprises a pair of said motorized drawing wheels arranged coaxially to said horizontal axis and on opposite sides of said vertical axis; said first driving means comprising friction coupling means to allow relative rotations between the wheels of said pair of wheels about said horizontal axis at least during the rotation of the wheels about said vertical axis.

The present invention further relates to a method for moving forward a glass sheet.

According to the present invention, a method for moving forward a glass sheet is provided as claimed in claim 12.

The invention will now be described with reference to the accompanying drawings, which illustrate a non-limitative embodiment thereof, in which:
figures 1 and 2 show a perspective view of a preferred embodiment of the conveyor according to the present invention arranged in two different functional configurations;
figure 3 shows a partial, side elevation view of the conveyor in figures 1 and 2;
figure 4 shows a detail of figures 1 and 2 on an enlarged scale;
figure 5 shows a further variant of a detail in figures 1 and 2; and
figure 6 is a figure similar to figure 4, and diagrammatically shows a variant of some details in figure 4.

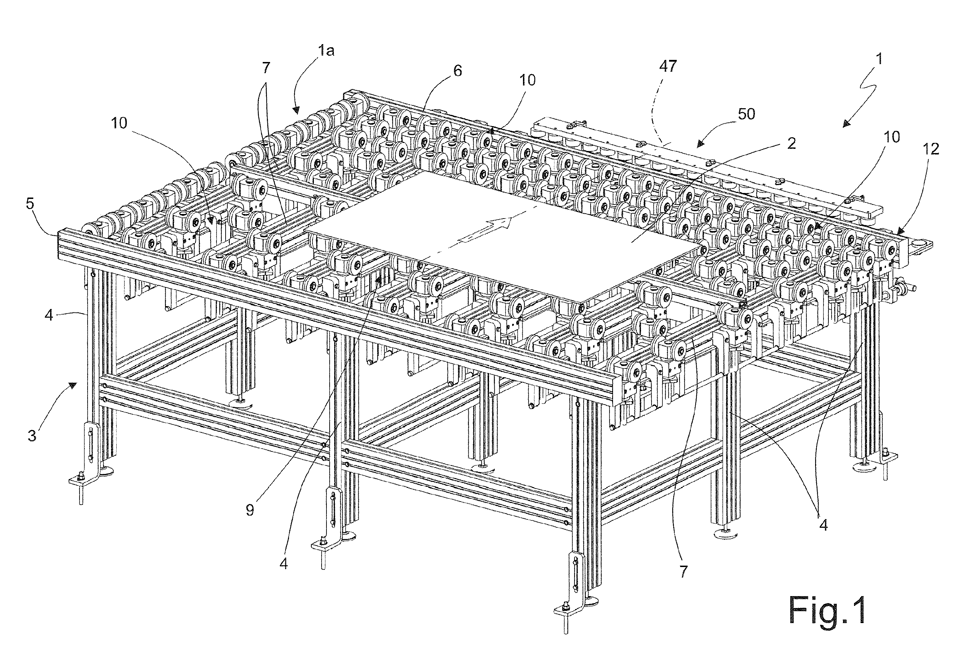

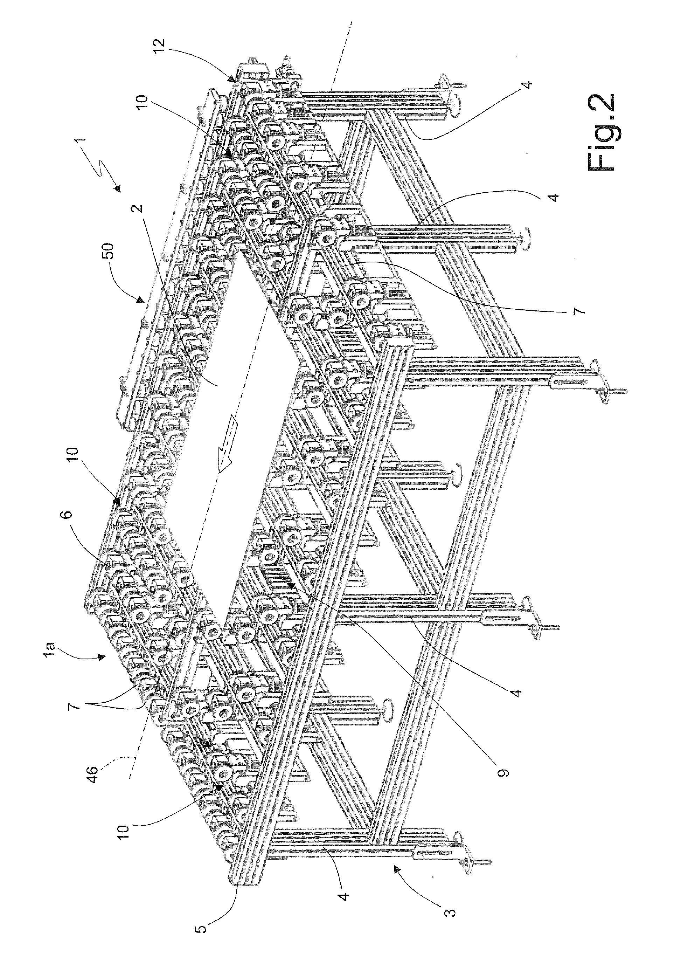

In figures 1 and 2, numeral 1 denotes a wheel conveyor for moving forward and positioning glass sheets 2 (only one of which is shown in the accompanying figures).

In the particular example described, conveyor 1 defines a horizontal resting plane for the glass sheets 2 and comprises a base 3 comprising, in turn, a plurality of uprights 4, a pair of side longitudinal members 5 and 6 parallel to each other and transversally spaced apart from each other, and a plurality of crosspieces 7, also parallel to one another, extending orthogonally to the longitudinal members 5 and 6 and integrally connected, in a known manner, to the longitudinal members 5,6.

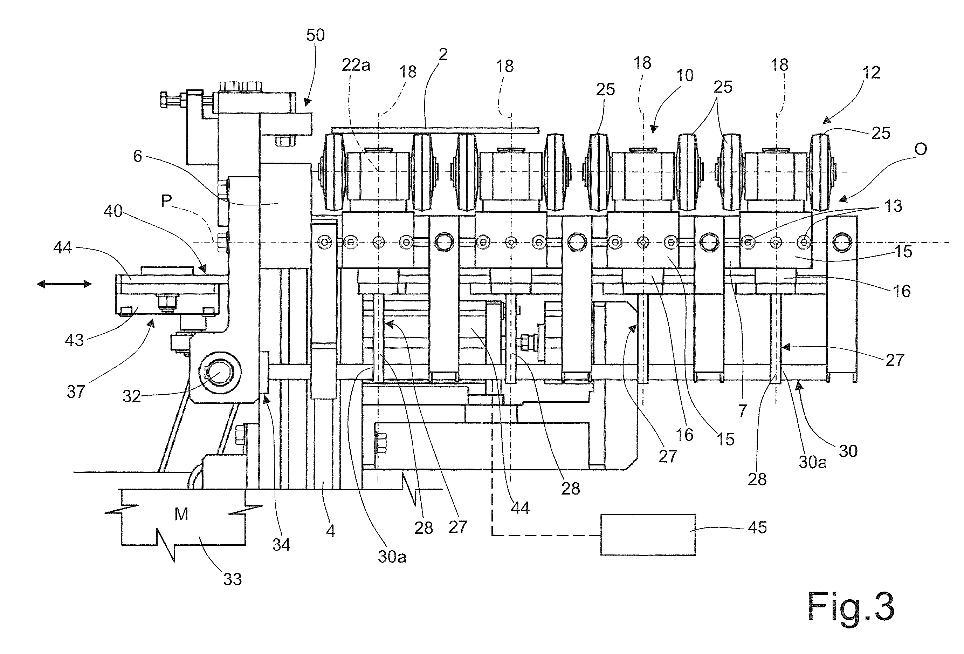

In the particular example shown in figures from 1 to 4, conveyor 1 then comprises an assembly 9 of reciprocally distinct conveying units 10 for the glass sheets 2, distributed on a horizontal plane P (figure 3) between the longitudinal members 5 and 6 as a function of the size and geometry of the glass sheets 2 to be moved. In the particular example described, conveyor 1 comprises a respective row 12 of units 10 for each crosspiece 7, which are distributed along the respective crosspiece 7 and which are connected to the respective crosspiece 7 itself in a releasable manner, e.g. by means of common screws 13 (figure 3).

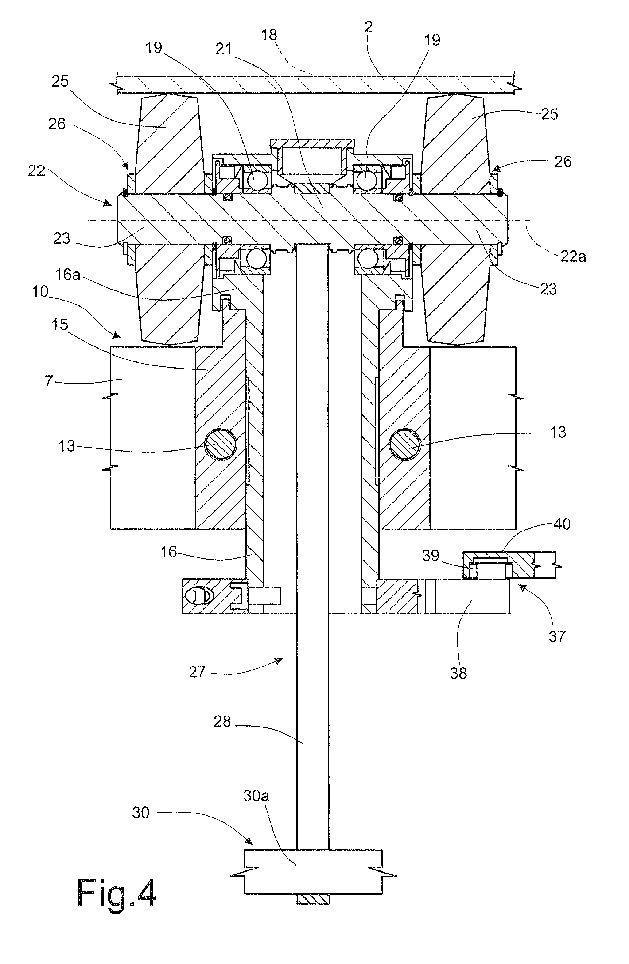

With reference to figures 3 and 4, each unit 10 comprises its own hollow attachment block 15 integrally connected to the corresponding crosspiece 7 by means of corresponding screws 13, and a tubular body 16 vertically extending through the corresponding hollow block 15 and rotationally coupled to the hollow block 15 itself about a corresponding vertical axis orthogonal to plane P and in an axially fixed position. An intermediate segment 21 of a horizontal rotating shaft 22, the opposite end segments 23 of which overhangingly protrude beyond portion 16a, is rotationally coupled to an upper end portion 16a of each tubular body 16 by interposing a pair of bearings 19. A respective drawing wheel 25 is coupled to each end segment 23 by means of a respective angular friction coupling device 26, adapted to allow a relative motion between the corresponding segment 23 of shaft 22 and the corresponding wheel 25 when a braking torque acting on the wheel 25 itself exceeds a predetermined threshold value.

Each rotating shaft 22 can rotate about its own axis 22a, orthogonal to axis 18, under the bias of its own belt transmission 27. Each transmission 27 comprises a flat belt 28 extending through the corresponding tubular body 16 and looped as a ring about the intermediate segment 21 of the corresponding shaft 22 between the bearings 19 and about an intermediate segment 30a of an elongated rotating shaft 30 extending under the crosspieces parallel to plane P and in common to all the units 10 coupled to the same crosspiece 7.

The elongated shafts 30 are conveniently operated by a single shaft 32 (figure 3), which is arranged at the head of the shafts 30 essentially under the longitudinal member 6 and operated by a ratio motor unit 33. Each of the shafts 30 is conveniently coupled in an angularly fixed manner to the shaft 32 by means of a respective conical toothed wheel transmission 34.

Again with reference to figures 3 and 4, the tubular bodies 16, in combination with the respective wheels 25, simultaneously rotate about the respective vertical axes 18 between two extreme end positions rotated with respect to each other by an angle of at least 90° under the bias of a mechanical transmission 37.

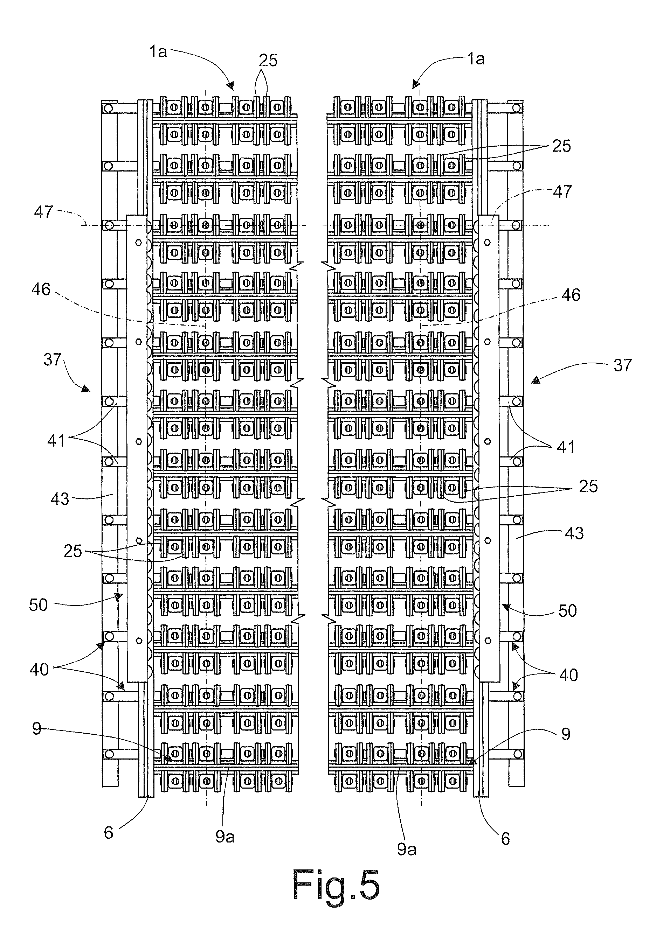

Transmission 37 comprises a respective crank 38 for each tubular body 16 (figure 4), an end attachment portion of which is integrally connected to a lower end segment of the tubular body 16, and an opposite end portion of which engages a corresponding fork-shaped body 39 firmly connected to a shifting control rod 40, which forms part of the transmission 37, extends parallel to and in a position near the respective crosspiece 7, and is in common to all units 10 connected to the same crosspiece 7. The longitudinal ends 41 of rods 40 are connected (figure 3) to a common bar 43 orthogonal to the rods themselves and translating parallel to itself under the bias of one or more linear actuators 44, conveniently a hydraulic actuator or ratio motor unit, controlled by a control unit 45 to synchronously shift the rods 40 in a continuous manner and rotate the wheels 25 about the respective axes 18 between two angular positions, in which the respective shaft 22 is rotated by substantially 90° and the wheels 25 are oriented in a longitudinal direction 46, shown in figures 2 and 5 and in a transversal direction 47 orthogonal to direction 46 and shown in figure 1, respectively, to move the sheet 2 forward in the same directions.

In use, starting from the condition shown in figures 1 and 3 in which wheels 25 are oriented in the longitudinal direction 46 and can rotate about the axes 22a under the bias of respective belt transmissions 27, sheet 2 is deposited on conveyor 1 and translated by the same wheels 25 in the longitudinal forward direction 46 towards an outlet 1a of conveyor 1. Immediately after the sheet 2 has been deposited on conveyor 1 or afterwards, the sheet 2 is "referenced", i.e. oriented and taken to a reference position to then be moved forward again in the longitudinal direction 46. Such an operation is carried out by simultaneously translating the bars 40, by means of actuator 44, and therefore rotating the tubular bodies 16 and the wheels 25 by 90°, as shown in figure 2. Once such a position has been reached, the wheels 25 move sheet 2 in the transversal direction 47, pushing it against a roller reference device 50 (known per se and not described in detail) integrally connected to the longitudinal member 6.

During the rotation of wheels 25 about the respective vertical axes 18, the shafts 22 continue to rotate as they are drawn by the respective belts 28 which simply twist thus ensuring the motion transmission, while the friction coupling devices 26 allow the respective wheels 25 to rotate with respect to the respective segments 23, thus avoiding slipping between wheels 25 and sheet 2, and therefore any scratching or damage to the sheet 2 itself. Once the positioning of sheet 2 has been completed, the wheels 25 are rotated again about the respective vertical axes 18 and returned to their original position, in which they move the sheet 2 forward again towards the outlet 1a of conveyor 1.

The actual forward direction of sheet 2 is detected and the deviation between the actual translation direction and a theoretical or design direction is determined during the forward movement of sheet 2 towards the outlet 1a of conveyor 1 and/or during the translation towards the locator device 50. At this point, if the deviation exceeds a threshold value, the actual forward direction of sheet 2 is corrected by controlling the actuator 44 by means of the unit 45 so as to rotate the pairs of wheels 25 in either directions about the respective vertical axes 18 by an amount such as to either return the actual forward direction to coincide again with the theoretical direction or to contain the detected deviation under a predetermined threshold value.

Thereby, the sheets 2 are always all delivered in the same outlet position and not only always equally oriented.

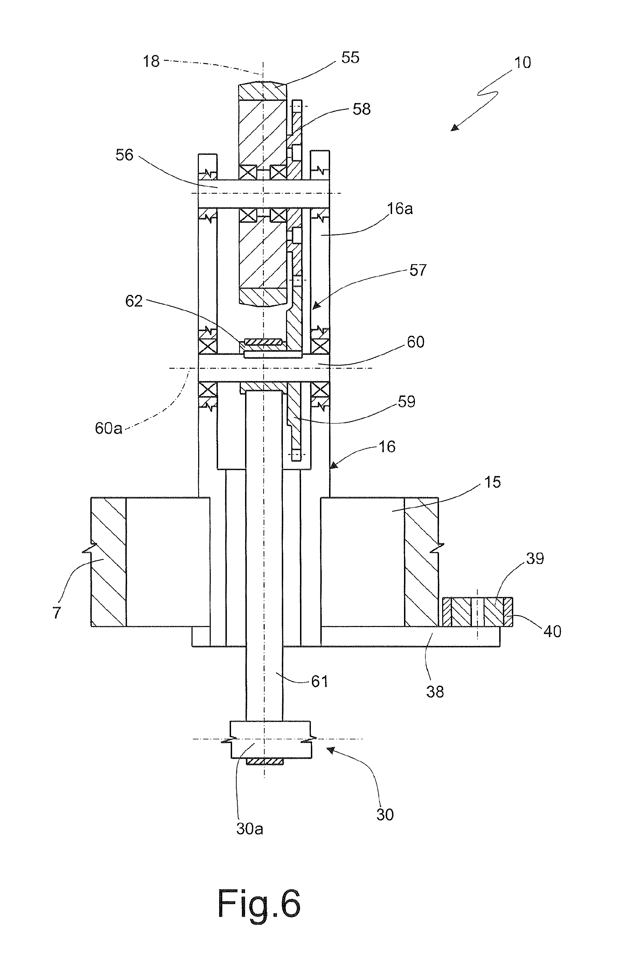

In the variant shown in figure 6, the pair of wheels 25 of each forward movement unit 10 is replaced by a single motorized wheel 55 coupled to the corresponding body 16 in a position such as not to be intersected by the respective vertical axis 18. In particular, an outer contact surface of wheel 55 with sheet 2 is cusp-shaped so as to define a contact zone with sheet 2 which is substantially point-shaped and crossed by the vertical axis 18. The wheel 55 is coupled to an intermediate segment of a shaft 56, which is orthogonal to axis 18, and motorized by means of a transmission 57.

Transmission 57 comprises two toothed wheels 58 and 59 meshing with each other; the wheel 58 is angularly integral with wheel 55, while the wheel 59 is keyed onto a transmission shaft 60. Shaft 60 is coupled to the portion 16a in an axially fixed position and in a rotational manner about an axis 60a parallel to the axis of shaft 56. Shaft 60 is rotated by a belt 61, which forms part of the transmission 57 and is looped as a ring about a pulley 62 keyed onto the shaft 60 at and under the wheel 55 and about the intermediate portion 30a of shaft 30. During the rotation of the body 16 about axis 18, the belt 61 behaves in the same manner as belt 28.

As in the two wheel solution, shown in figure 4, the single wheel solution, shown in figure 6, avoids any appreciable slipping between wheel and glass sheet during the rotation of the wheel about the corresponding axis 18.

In the variant shown in figure 5, conveyor 1 comprises, in addition to assembly 9, a further assembly 9a of units 10 arranged close to the assembly 9 but independently from the assembly 9 itself. The two assemblies 9 and 10 comprise an equal number or alternatively a different number of mutually equal forward movement units 10 to autonomously move forward respective glass sheets 2 in equal or different directions to/from the directions 46 and 47 and/or at respective forward movement speeds either equal to or different from each other.

From the above description, it is apparent that the described conveyor 1 is very simple from a constructional point of view, as well as easy and punctual to be controlled as compared to the known solutions. The simple rotation of wheels 25 about the respective vertical axes allows, very rapidly and without ever lifting the sheet 2 from the resting plane, i.e. without ever interrupting the sheet-support contact, to divert the forward movement path of the sheet itself by 90 degrees, e.g. to place or reference the sheet but also to correct the forward movement direction in a punctual, continuous manner so that the sheets always follow a predetermined path and are consequently always delivered in the same position at the outlet of conveyor 1. The latter aspect suppresses all the problems due to positioning errors during a subsequent operation of picking the sheets by means of automated equipment.

Including two or more reciprocally independent assemblies of units 10 on the same conveyor allows to manage different flows or sequences of sheets 2 either simultaneously or in parallel, and to move forward the same sheets at varying pitch by simply varying the rotation speed of the wheels 25 about the respective horizontal axes 22a.

Using belt transmissions allows to keep the shafts 22 rotating regardless of the angular position of the wheels 25, while the friction coupling devices 26 interposed between shafts 22 and wheels 25 allow, on one hand, a pure rolling of the wheels 25 in contact with the sheet of glass during the rotation about the vertical axes 18, and define a safety system capable of avoiding chipping or breakage of the sheets if they knock or jam against fixed elements.

From the above description, it is apparent that modifications and variants may be made to the described conveyor 1, without departing from the scope of protection defined by the claims. In particular, the wheels 25 may be motorized by means of actuating devices different from the belt device and/or may be partially replaced by idle wheels, again rotational about respective vertical axes but only performing a supporting and not a drawing action.

## Claims

1. A wheel conveyor to move forward a glass sheet comprises a support structure and conveying means to move forward at least one glass sheet selectively in a longitudinal direction and in a direction transversal to said longitudinal direction, **characterized in that** said conveying means comprises at least one assembly of wheel conveying units distributed in a horizontal plane and each comprising a support frame coupled to said structure, at least one respective motorized drawing wheel arranged in a vertically fixed position with respect to said horizontal plane and to said fixed frame, first driving means to rotate said drawing wheel about a horizontal axis parallel to said plane, and second driving means to rotate said drawing wheel about a vertical hinge axis orthogonal to said horizontal plane.

2. The conveyor according to claim 1, **characterized in that** at least part of said conveying units comprises a pair of said motorized drawing wheels arranged coaxially to said horizontal axis and on opposite sides of said vertical axis; said first driving means comprising friction coupling means to allow the drawing of the sheet and relative rotations between the wheels of said pair of wheels about said horizontal axis at least during the rotation of the drawing wheels about said vertical axis.

3. The conveyor according to claim 1, **characterized in that** at least part of said conveying units comprises a single said drawing wheel intersected by said vertical hinge axis.

4. The conveyor according to claim 3, **characterized in that** said single drawing wheel has a substantially punctiform contact area with said sheet and crossed by said vertical axis.

5. The conveyor according to any of the preceding claims, **characterized in that** said second driving means comprises, for each of said units, a respective vertical shaft coaxial to said vertical axis and coupled to the relative said support frame rotatingly about said vertical axis and in an axially fixed position, and a mechanical rotation transmission of said vertical shafts and comprising a motorized driving rod common to all units.

6. The conveyor according to claim 5, **characterized in that** said mechanical transmission also comprises a coupled crank on each of said vertical axes; the cranks of at least part of said units being connected to another common rod connected to said driving rod.

7. The conveyor according to claim 5 or 6, **characterized in that** said second driving means also comprises a linear actuator connected to said driving rod and command and control means to move together said further translating rods and rotate said drawing wheels continuously between two end angular positions forming therebetween an angle of at least 90°.

8. The conveyor according to any of claim 5 to 7, **characterized in that** each of said vertical shafts is a hollow shaft, and **in that** said first driving means extend partially within said hollow shaft.

9. The conveyor according to claim 8, **characterized in that** said first driving means comprises a ring closed belt extending through said hollow vertical shaft and wound about a respective segment of a common rotating shaft and at least part of the conveying units of said assembly of units.

10. The conveyor according to any of the preceding claims, **characterized in that** the support frames of at least part of said conveying units are connected to a rectilinear crossbar of said structure in relative positions adjustable along the crossbar.

11. The conveyor according to any of the preceding claims, **characterized by** comprising, at least one further assembly of wheel conveying units distributed in a horizontal plane; said further assembly comprising the same or a different number of said conveying units and being independent of said assembly to feed glass sheets in the same or in different directions with respect to said longitudinal and transversal directions.

12. A method to move forward a glass sheet using a wheel conveyor according to claim 1; the method comprising the steps of moving forward the sheet in a rectilinear direction, and being **characterized by** detecting an actual forward direction of the sheet, comparing the actual direction with a desired theoretical direction, determining the gap between said actual and theoretical directions and rotating said wheels about respective vertical axes by an amount such as to bring the determined gap at least below an acceptability value.
